**Europäisches Patentamt**

**European Patent Office**

**Office européen des brevets**

(11) Veröffentlichungsnummer: **0 127 570**
**A2**

# (12) EUROPÄISCHE PATENTANMELDUNG

(21) Anmeldenummer: **84730052.2**

(22) Anmeldetag: **18.05.84**

(51) Int. Cl.³: **H 04 B 9/00**
H 04 Q 11/04, H 04 Q 3/52

(30) Priorität: **19.05.83 DE 3318483**

(43) Veröffentlichungstag der Anmeldung:
**05.12.84 Patentblatt 84/49**

(84) Benannte Vertragsstaaten:
**AT BE CH DE FR GB IT LI LU NL SE**

(71) Anmelder: **Heinrich-Hertz-Institut für
Nachrichtentechnik Berlin GmbH
Einsteinufer 37
D-1000 Berlin 10(DE)**

(72) Erfinder: **Kreutzer, Heinrich Wilhelm, Dipl.-Ing.
Marienplatz 8
D-1000 Berlin 45(DE)**

(72) Erfinder: **Heydt, Günter
Steilpfad 35
D-1000 Berlin 27(DE)**

(72) Erfinder: **Hermes, Thomas, Dr.-Ing.
Helmholtzstrasse 26
D-1000 Berlin 10(DE)**

(74) Vertreter: **Wolff, Konrad
Heinrich-Hertz-Institut für Nachrichtentechnik Berlin
GmbH Einsteinufer 37
D-1000 Berlin 10(DE)**

(54) **Lokales Kommunikationssystem mit einem Sternnetz und optischen Kanälen.**

(57) Lokale Kommunikationssysteme gibt es für unterschiedliche Dienste. In privaten Nebenstellenanlagen steht "fernsprechen" im Vordergrund. Verteilte Rechner kommunizieren über Datenbusse. Noch weitgehend ungeklärt ist die Realisierung oder Einbeziehung von Breitbanddiensten.

Ein lokales Kommunikationssystem gemäß der Erfindung bietet ausreichende Flexibilität, um branchenspezifische Anforderungen an einzelne Dienste weitgehend zu erfüllen und dennoch die Diensteintegration zu befördern. Die optische Nachrichtentechnik wird für die Übertragung und die Vermittlung eingesetzt. Die zwischen den Teilnehmerstationen befindlichen Komponenten sind im wesentlichen passiv. Das Netz ist in Sternstruktur ausgelegt. Der schmal- und mittelbandige Verkehr wird in einem vollsynchronen Zeitmultiplexsystem mit wahlfreiem Zugriff und schneller Leitungsvermittlung abgewickelt. Bei einer an sich davon getrennten Führung von Breitbanddiensten erfolgt deren Signalisierung wie bei Schmalbanddiensten. Ein unbefugter Zugriff auf Zeitschlitze läßt sich durch zusätzliche Maßnahmen verhindern.

.../...

**F i g.1**

Heinrich-Hertz-Institut für Nachrichtentechnik Berlin
GmbH                                    12/0583 EP

Lokales Kommunikationssystem mit einem Sternnetz
und optischen Kanälen

Die Erfindung bezieht sich auf ein lokales Kommunikationssystem - LKS - mit einem Sternnetz und optischen
Kanälen, in dem für jede Teilnehmerstation für die
Sende- und die Empfangsrichtung getrennte, in einem
zentralen Sternkoppler zusammengeführte Lichtwellenleiter vorgesehen sind und die Teilnehmerstationen solche Komponenten enthalten, die zur elektrisch-
optischen bzw. optisch-elektrischen Signalumwandlung
und für den Zugriff auf einen Kanal benötigt werden.

Als "Lokales Kommunikationssystem - LKS" werden sehr
unterschiedliche Systeme bezeichnet, die sich zudem in
schneller Weiterentwicklung befinden. So wird dieser
Begriff beispielsweise im Bereich privater Nebenstellenanlagen verwendet. Dort steht der Dienst "Fernsprechen" im Vordergrund, für den eine zentrale digitale
Vermittlungstechnik auf der Basis des 64 kbit/s-Kanal
entsteht. Wird ein schneller Verbindungsaufbau in ca.
5 ms oder weniger eingeführt, läßt sich eine Fülle
weiterer Schmalbanddienste in solchen Nebenstellenanlagen abwickeln.

Als Lokales Kommunikationssystem werden aber auch lokale Datenübertragungsanlagen bezeichnet. Sie unterscheiden sich von Fernsprech-Nebenstellenanlagen durch
die Übertragungsrate (derzeit einige Mbit/s), teilnehmerzugeordnete Steuerungen, Paketvermittlung usw. In
der Regel fallen dort die zu übermittelnden Daten in
verhältnismäßig geringem Umfang und in sehr unregelmäßigen Abständen an.

Die nachfolgend aufgeführten, eine begrenzte Auswahl repräsentierenden Veröffentlichungen spiegeln den derzeitigen Stand der Entwicklung optischer Kommunikationssysteme wieder. Aus "Siemens Forsch.-u.Entwickl.-Ber." Bd. 9 (1980) Nr. 1 Seiten 32 bis 37 ist bekannt, unter welchen Voraussetzungen Sternkoppler-Konfigurationen für Lichtwellenleiter-Bussysteme in einer verteilten Multimikrocomputerstruktur zum Einsatz kommen können. Einen weiteren Überblick zu optischen Datenbussen in verteilten Rechner-Systemen bietet "Optische Informationsübertragung mit Lichtwellenleitern", VDE-Verlag Berlin 1982 (Kontakt & Studium Bd. 96), dort Kapitel 8, Seiten 119 bis 144. Das sich dort anschließende Kapitel 9, Seiten 145 bis 173, befaßt sich mit der digitalen und analogen optischen Breitband-Übertragungstechnik. Eine weitere Darstellung von lokalen Kommunikationssystemen auf der Basis der Technologie für faseroptische Kommunikation findet sich in "Siemens Forsch.-u.Entwickl.-Ber." Bd. 12 (1983) Nr. 1, Seiten 3 bis 10. Über ein digitales integriertes Netz, insbesondere dessen Komponenten, Struktur und Organisation des Systems wurde anläßlich des "1978 International Zurich Seminar on Digital Communication", 7./9.März 1978 - s. "Proceedings", S. B 7.1 bis B 7.6 - berichtet.

Hieraus läßt sich folgende Tendenz ablesen: Für einige Anwendungsbereiche liegen zahlreiche· Vorschläge bzw. sogar marktfähige Systeme vor. Zukunftssichere Systeme beruhen auf optischer Nachrichten- oder Datenübertragung. Die Einbeziehung von Diensten aller Kategorien, d.h. von Schmal-, Mittel- und Breitbanddiensten in ein Lokales Kommunikationssystem ist aber noch weitgehend ungeklärt.

Die Erfindung geht davon aus, daß ein solches System große Flexibilität aufweisen muß, um die sehr heterogenen Voraussetzungen, d.h. die Vielzahl branchenspezifischer Anforderungen, erfüllen zu können, und daß hierzu die optische Nachrichtentechnik, sowohl für die Übertragung als auch für die Vermittlung, so weit wie möglich, eingesetzt werden sollte. Dies wird gemäß der Erfindung gelöst durch ein vollsynchrones Zeitmultiplexsystem mit wahlfreiem Zugriff (TDMA-System) und einer maximalen Datenrate im Gbit/s-Bereich für die integrierte Abwicklung mit schneller Leitungsvermittlung von unterschiedlichen Diensten, d.h. Schmalbanddiensten mit einem Bandbreitenbedarf bis 64 kbit/s und Mittelbanddiensten mit einem Bandbreitenbedarf weit über 64 kbit/s sowie gegebenenfalls zumindest einer schmalbandigen Signalisierung bei Breitbanddiensten.

Die einzelnen Merkmale der erfindungsgemäßen Lösung sind für sich genommen zweifellos in diesem oder jenem Zusammenhang bereits bekannt. Dies ist durchaus gewollt, da eingeführte und bewährte Techniken nicht unnötig aufgegeben werden sollen. Da es aber für die integrierte Abwicklung von unterschiedlichen Diensten schlechthin nicht möglich ist, es überall bei den bisherigen Konzepten zu belassen, muß ein Mindestmaß solcher Details vorgegeben werden, die einheitlich für die verschiedenen Dienste zur Anwendung kommen können. So ist beispielsweise für den Dienst "Fernsprechen" ein vollsynchrones Zeitmultiplexsystem nicht ungewöhnlich. Allein dafür würde man wohl aber eine Datenrate im Gbit/s-Bereich, zumal in einem Lokalen Kommunikationssystem, nicht vorsehen. Weiterhin sind im Bereich privater Nebenstellenanlagen zwar Sternnetze weit verbreitet, nicht jedoch solche mit optischen Kanälen, für die die einzelnen Teilnehmerstationen für die Sende- und die Empfangsrichtung über getrennte, in einem zentralen Sternkoppler zusammengeführte Lichtwellenleiter miteinander verbunden und mit solchen Komponenten ausgerüstet sind, die für den Zugriff auf einen Kanal benötigt werden.

Merkmale wie Sternnetz, optische Kanäle, voneinander getrennte Lichtwellenleiter für die Sende- und die Empfangsrichtung, deren Zusammenführung in einem zentralen Sternkoppler sowie die Ausrüstung der angeschlossenen Stationen mit solchen Komponenten, die zur elektrisch-optischen bzw. optisch-elektrischen Signalumwandlung und für den Zugriff auf einen Kanal benötigt werden, sind - zumindest teilweise - von Rechnersystemen her bekannt. Dafür sind dort vollsynchrone Zeitmultiplexsysteme, wahlfreier Zugriff, schnelle Leitungsvermittlung sowie auch Datenraten im Gbit/s-Bereich für optische Übertragung und Vermittlung nicht gebräuchlich.

Bezüglich der Breitbanddienste sind, wie eingangs schon erwähnt, viele Einzelheiten nicht geklärt. Die optische Übertragung ist beherrschbar, sowohl in analoger als auch in digitaler Technik. Deren Vermittlung erfolgt, wenn überhaupt, bisher in Form elektrischer Signale. Ein auf dem Heterodyn-Prinzip beruhendes Konzept - siehe EP - A1 0 077 292 (Erfinder: Strebel, B.; Bachus, E.-J.) - erfordert in jedem Fall Monomodefasern und -Koppler. Bei einem größeren Angebot an Breitbanddiensten sollte zumindest deren schmalbandige Signalisierung im selben Netz mit den Schmal- und Mittelbanddiensten durchgeführt werden. Bei Ausführungsformen der Erfindung wird deshalb vom zentralen Sternkoppler zumindest der leere Zeitmultiplexrahmen und die Signalisierung aller integrierten Dienste an die angeschlossenen Teilnehmer- bzw. Überwachungs-/Steuer-Stationen weiter geleitet.

In Bezug auf Mittelbanddienste, im wesentlichen also Datenübermittlung für Rechner, stellt ein vollsynchrones Zeitmultiplexsystem mit wahlfreiem Zugriff und schneller Leitungsvermittlung einen beachtlichen Gegensatz zu der dort bisher üblichen Paketvermittlung dar. Selbstverständlich ist hierbei eine schnelle Leitungsvermittlung, also eine Durchschaltung einer Punkt-zu-Punkt-Verbindung in etwa 5 ms oder weniger, von besonderer Bedeutung. In Anbetracht dessen, daß bei einer schnellen TDMA-Vermittlung keine Paketverluste auftreten, die für Sprach-, Ton- und Bewegtbildsignale ohnehin nicht akzeptiert werden könnten, dürfte eine solche, für Datenverkehr an sich bisher unübliche Vermittlungstechnik, auch hier von Vorteil sein.

Bei bevorzugten Ausführungsformen der Erfindung ist ein Generator - als solcher an sich bekannt - vorgesehen, der einen leeren Zeitrahmen erzeugt und diesen über einen Lichtwellenleiter in den zentralen Sternkoppler einspeist. Aus Sicherheitsgründen sollten dieser Sync.-Generator und der zentrale Sternkoppler örtlich möglichst eng benachbart sein. Im Prinzip kann die Generierung und Einspeisung des leeren Zeitrahmens aber auch von einer entsprechend ausgerüsteten Teilnehmerstation wahrgenommen werden.

Kennzeichnend für eine weitere Ausführungsform der Erfindung sind Zeitschlitze des Zeitmultiplexrahmens mit Schutzzonen am Anfang und am Ende. Hierdurch wird zwar die für die eigentliche Nachricht nutzbare Übertragungskapazität verringert, aber verhindert, daß in zwei benachbarten Zeitschlitzen, die von verschiedenen Teilnehmerstationen in den zentralen Sternkoppler gesendet werden, bei ungenauer Synchronisierung sich Zeitschlitzinhalte gegenseitig zerstören. Eine solche Schutzzone kann beispielsweise am Anfang eines Zeitschlitzes von wenigen, d.h. ein, zwei oder drei Leerbits und einem Startbit, am Ende entsprechend von einem Stopbit und wenigen Leerbits, gebildet werden.

An dieser Stelle soll kurz auf die Synchronisierung einer Teilnehmerstation eingegangen werden. Hierzu sendet sie an sich selbst in einem freien Zeitschlitz ein Prüfwort aus. Sie empfängt dieses Prüfwort nach der doppelten Laufzeit (2 mal einfache Entfernung bis zum zentralen Sternkoppler). Die Teilnehmerstation braucht ihren Sendezeitpunkt nur so zu verschieben, bis das Prüfwort zeitlich richtig, bezogen auf das Synchronisierwort des herrschenden Zeitrahmens, empfangen wird. Sind Synchronisierwort und Prüfwort im empfangenen Zeitrahmen im richtigen Abstand, so sind sie es auch im Sternkoppler und damit auch bei der Aussendung. Da der Synchronismus auch im Betriebszustand leicht überwacht werden kann, benötigt man für die oben genannten Schutzzonen in einem Zeitschlitz tatsächlich nur sehr wenige Leerbits.

Einen besonderen Vorteil bieten Ausführungsformen der Erfindung mit einer beliebig wählbaren Bitrate innerhalb des Nutzbereichs eines Zeitschlitzes. Endeinrichtungen für die verschiedenen Dienste brauchen also nicht auf dieselbe Bitrate ausgelegt zu sein. Während der Aufbauphase einer Punkt-zu-Punkt-Verbindung signalisieren sich die betreffenden Teilnehmerstationen, mit welcher Bitrate sie ihre Nachrichten oder Daten für die vorhandenen Endgeräte des betreffenden Dienstes senden bzw. empfangen können. Hierdurch wird also eine nicht unbeachtliche Flexibilität erreicht, die der Aufgabenstellung für die Erfindung zugrunde liegt. Die Art der Daten und deren Struktur, insbesondere die für sie gewählte Modulation oder Kodierung, innerhalb des Nutzbereichs eines Zeitschlitzes ist bei Ausführungsformen der Erfindung ohnehin nicht fest vorgegeben, d.h. Lokale Kommunikationssysteme entsprechend der Erfindung sind diesbezüglich transparent.

Im allgemeinen wird aus wirtschaftlichen Gründen, aber auch im Hinblick auf Erweiterungsmöglichkeiten oder höhere Ausbaustufen lokaler Kommunikationssysteme eine getrennte Führung der Breitband- und der übrigen Dienste vorgesehen sein. Für eine derartige getrennte Führung kommen beispielsweise gesonderte Lichtwellenleiter oder auch die Wellenlängenmultiplextechnik in Betracht. Insoweit ist es auch für Ausführungsformen der Erfindung vorteilhaft, ein eigenes transparentes optisches Koppelfeld mit einer Raumstufe für die Durchschaltung von Breitbanddiensten vorzusehen. Zeitstufen oder Zeit-/Raum-Stufen in Koppelfeldern müssen taktabhängig geschaltet werden. Da dies der Idee des transparenten Kanals entgegensteht, muß ein Koppelfeld in einem Lokalen Kommunikationssystem, das die gewünschte Flexibilität aufweisen soll, als reine Raumstufe ausgebildet sein.

Zweckmäßig sind optische Schalter in LiNbO$_3$-Technik, aus denen das Koppelfeld für die Durchschaltung der Breitbanddienste aufgebaut ist. Derartige optische Schalter lenken durch ein angelegtes elektrisches Feld die Lichtwelle um, wirken also im Prinzip wie eine Weiche oder Abzweigung im Transportwesen oder wie ein Fluid-Schalter für strömende, gasförmige oder flüssige Medien. Sie lassen sich, wenn auch nicht in beliebigem Umfang, kaskadieren, so daß von einem Eingang eines Koppelfeldes aus mehrere Ausgänge erreichbar sind. Sofern ein ausreichend großes Koppelfeld mit derartigen optischen Schaltern nicht verfügbar ist, können bei Ausführungsformen der Erfindung auch mehrere kleinere Koppelfelder und mehrere Wellenlängen für die Übertragung von Breitbanddiensten vorgesehen werden. Während der im Schmalbandsystem stattfindenden Signalisierung für eine Breitband-Punkt-zu-Punkt-Verbindung findet dann hierfür eine entsprechende Zuweisung der zu benutzenden Wellenlänge und des einzuschaltenden Koppelfeldes statt.

Aus den bisherigen Erläuterungen ist zu entnehmen, daß die Vermittlung in einem Lokalen Kommunikationssystem gemäß der Erfindung im wesentlichen dezentral erfolgt. Dazu sind die Teilnehmerstationen mit solchen Komponenten ausgerüstet, die für den Zugriff auf einen Kanal benötigt werden. Bei bislang bekanntgewordenen Systemen mit dezentraler Vermittlung werden häufig Eigenschaften der verwendeten Netzstruktur und des Vermittlungsprinzips zur Beurteilung des einen - d.h. der Netzstruktur - und des anderen - d.h. der dezentralen Vermittlungstechnik - in unzulässiger Weise miteinander verknüpft. Eine dezentrale Vermittlung erfordert beispielsweise, den Summenverkehr allen angeschlossenen Teilnehmerstationen zuzuführen. Hierfür scheinen
Ring- oder Linien-Strukturen für das Netz geeigneter
zu sein als ein Sternnetz. Sicherheitsüberlegungen
führen demgegenüber zu einer Sternstruktur. Hierbei
sind wiederum höhere Kabellängen pro Teilnehmer nötig
als bei Ringstruktur.

Bei der Erfindung sind für die Festlegung auf ein
Sternnetz und optische Nachrichtentechnik für die Übertragung und die Vermittlung folgende Gründe ausschlaggebend:

- Bei einem Lokalen Kommunikationssystem sind die zu
  überbrückenden Entfernungen gering. Kabel- und Kabelverlegungskosten spielen also eine untergeordnete
  Rolle. Auswirkungen eines Kabelbruchs oder eines ähnlichen Defekts sind in Sternnetzen am geringsten.

- Optische Nachrichtentechnik für die Übertragung und
  die Vermittlung bedeutet, eine Signalumwandlung in
  den elektrischen Bereich kann, und sollte deshalb
  auch, möglichst nur im Bereich der Teilnehmerstationen erfolgen. Ausnahmen, die diese Regel bestätigen,
  sind deshalb auf zentrale Einrichtungen für Überwa-
  chungs-, Steuerungs- und ähnliche Aufgaben zu beschränken.

- Damit ergibt sich ein System mit dezentraler Vermittlung, d.h. die einzelnen Teilnehmerstationen müssen
  so autonom ausgerüstet sein, daß sie von sich aus auf
  einen benötigten Kanal zugreifen können.

Aus dieser Konsequenz folgt allerdings ein Problem, das ebenfalls gelöst werden muß, nämlich die Verhinderung eines unberechtigten Zugriffs auf einen Kanal, sowohl im Hinblick auf Abhörsicherheit als auch auf Störung von fremden Kanälen bzw. des gesamten Systems. Hierzu ist naturgemäß ein gewisser Aufwand erforderlich, der sich jedoch gemäß einer weiteren vorteilhaften Ausführungsform der Erfindung auf optische Schalter an den Anschlüssen der Lichtwellenleiter für die Sende- und die Empfangsrichtung am zentralen Sternkoppler und auf eine als Überwachungseinrichtung für den Belegungszustand der Kanäle ausgebildete Station beschränkt, die die optischen Schalter dem Belegungszustand entsprechend steuert. Aufgrund dieser Maßnahmen ist es also möglich, nur den jeweiligen Teilnehmerstationen die ihnen zugeordneten Zeitschlitze, sowohl in der Sende- als auch in der Empfangsrichtung, durchzulassen. Signalisierungen können alle angeschlossenen Teilnehmerstationen über einen - oder mehrere - ständig für diesen Zweck freigegebene(n) Zeitschlitz(e) in den zentralen Sternkoppler absetzen. Von dort aus kann dann die Überwachungseinrichtung nach Art einer zentralen Vermittlungssteuerung für die Durchschaltung der gewünschten Punkt-zu-Punkt-Verbindungen sorgen.

Selbstverständlich sind hierzu weitergehende, auf demselben Grundprinzip beruhende Alternativen möglich. Beispielsweise ist jeder Teilnehmerstation auf der Empfangsfaser das Synchronisierzeichen zuzuführen. Dementsprechend ist ein optischer Schalter am Lichtwellenleiter für die Empfangsrichtung so zu steuern, daß einerseits - wie oben - ein einer Teilnehmerstation spezifisch zugeordneter Zeitschlitz, dazu ein allgemein allen Teilnehmerstationen zugeordneter Zeitschlitz, nämlich das Synchronisierzeichen, und andererseits in den verbleibenden Zeitschlitzen weitere Synchronisierzeichen zugeführt werden. Auf diese Weise empfängt eine Teilnehmerstation nur die für sie selbst bestimmten, individuellen und geheim bleibenden Nachrichten, während Nachrichten in anderen Kanälen, die für andere Teilnehmerstationen bestimmt sind, bei ihr nicht mehr eintreffen bzw. infolge Nebensprechen möglicherweise an sie gelangende, fremde Nachrichten von einem Synchronisierzeichen überdeckt werden.

Speziell auf ein Sternkoppler-TDMA-System gemäß der Erfindung angepaßt ist eine weitere Alternative. Die Schalter zwischen den Lichtwellenleitern und dem Sternkoppler lassen dabei natürlich auf den Empfangsleitungen den Zeitschlitz mit dem Synchronisierzeichen sowie alle leeren, d.h. nicht belegten Zeitschlitze, in beiden Richtungen durch. Wird ein Zeitschlitz für eine Punkt-zu-Punkt-Verbindung belegt, werden für die Dauer eines solchen Zeitschlitzes die Schalter an den Empfangs- und Sendefasern aller anderen, an dieser Verbindung nicht beteiligten Teilnehmerstationen geöffnet bzw. an den Empfangsfasern auf einen Besetztzeichen-Generator umgeschaltet. Diese Alternative liegt wieder näher am Prinzip der dezentralen Vermittlung, gewährleistet dennoch volle Abhörsicherheit und ermöglicht weiterhin, Urheber von Störungen in kürzester Zeit zu lokalisieren und diese sodann vom System abzuschalten. Dies sei anhand eines Beispiels näher erläutert: Hierzu wird zunächst angenommen, der Zeitmultiplexrahmen sei noch völlig leer, d.h. alle Teilnehmerstationen empfangen das Synchronisierzeichen, senden aber nicht. Alle Teilnehmerstationen haben jetzt die Möglichkeit, auf einen beliebigen Zeitschlitz zuzugreifen. Eine Signalisierung der Teilnehmerstation A an die Teilnehmerstation B wird von allen Teilnehmerstationen und der als Überwachungseinrichtung ausgebildeten Station empfangen. Ebenso verläuft die Rückmeldung, wobei diese in einem zweiten Zeitschlitz von jeder beliebigen Teilnehmerstation, die vom Berechtigten als Teilnehmerstation B definiert worden ist (Rufumlenkung), ausgesendet werden kann. Nunmehr öffnet die Überwachungseinrichtung die optischen Schalter an den Sendeleitungen aller anderen Teilnehmerstationen für die Dauer dieses Zeitschlitzes und legt die Schalter an den zugehörigen Empfangsleitungen auf den Besetztzeichengenerator um. Während die Teilnehmerstationen A und B nun über die betreffenden Zeitschlitze ihre Nachrichten austauschen, können also alle anderen Teilnehmerstationen in diesen Zeitschlitzen keine Signale in den zentralen Sternkoppler absetzen, die bestehende Verbindung also in keiner Weise stören. Sie können die für sie nicht bestimmten Nachrichten auch nicht auswerten, vielmehr erhalten sie an deren Stelle durch das Besetztzeichen die Information, daß es zwecklos ist, auf diese Zeitschlitze zugreifen zu wollen.

Eine Störung, für die eine noch unbekannte Teilnehmerstation der Urheber ist, läßt sich leicht dadurch lokalisieren, daß entweder zunächst alle Sendefaserschalter geöffnet und einzeln nacheinander wieder geschlossen oder einzeln nacheinander geöffnet werden, bis der Urheber entdeckt ist. Die Teilnehmerstation, der die Störquelle zugeordnet worden ist, wird bis zur Beseitigung der Störquelle vom Sendebetrieb ausgeschlossen, d.h. ihr Sendefaserschalter bleibt solange geöffnet.

Für Datenverkehr, bei dem nur eine Teilnehmerstation sendet und eine andere empfängt, kann übrigens nach abgeschlossener Signalisierung der zweite Zeitschlitz wieder freigegeben werden. Auch diese Tatsache ist hinsichtlich der gewünschten Transparenz für Ausführungsformen der Erfindung von Bedeutung.

In diesem Zusammenhang ist darauf hinzuweisen, daß zweckmäßig auch hier die optischen Schalter in $LiNbO_3$-Technik, vorzugsweise zusammen mit dem zentralen Sternkoppler als integriertes Bauteil, ausgebildet werden.

Wie für Kommunikationssysteme, insbesondere Lokale Kommunikationssysteme allgemein bekannt und gebräuchlich, ist es auch für Ausführungsformen der Erfindung sinnvoll und vorteilhaft, eine als Überleiteinrichtung zu einem anderen, insbesondere öffentlichen Netz sowie eine für Überwachungs-, Steuerungs- und insbesondere Gebührenerfassungsaufgaben ausgebildete Station vorzusehen. Diese Stationen sollten sich möglichst an zentraler Stelle, also zusammen mit dem Sternkoppler und Koppelfeldern für Breitbanddienste, an einem gemeinsamen Ort befinden.

In der Zeichnung sind schematisch Ausführungsformen der Erfindung dargestellt. Dabei zeigen:

Fig. 1: ein Prinzipschaltbild für ein Lokales Kommunikationssystem - LKS - mit Sternnetz und optischen Kanälen;

Fig. 2: ein Blockschaltbild einer vereinfachten Vermittlungsstelle für schnelle Durchschaltevermittlung bei Schmalbanddiensten und schnellem Datenverkehr;

Fig. 3: ein Schaubild für Aufbau und Organisation eines Zeitrahmens für das TDMA-System mit einigen detaillierten Beispielen für dessen Zeitschlitze;

Fig. 4: ein Schaubild zur Erläuterung der Funktion einer Synchronisierungs-Einstellung/ Überwachung;

Fig. 5: ein Schaubild zur Erläuterung der Funktion der Schaltstellungen von optischen Schaltern an einer Vermittlungsstelle in einem LKS gemäß Fig. 1 und der Zugriffsmöglichkeiten auf Schmalband- und schnelle Datenkanäle;

Fig. 6: eine Prinzipskizze eines bekannten Lithiumniobatschalters auf der Grundlage eines Richtkopplers;

Fig. 7: eine Prinzipskizze eines bekannten Lithiumniobatschalters auf der Grundlage einer schaltbaren Wellenleiterkreuzung

und Fig. 8: ein Blockschaltbild mit den wesentlichen Bestandteilen, die für eine Punkt-zu-Punkt-Verbindung in nur einer Übertragungsrichtung in einem LKS benötigt werden.

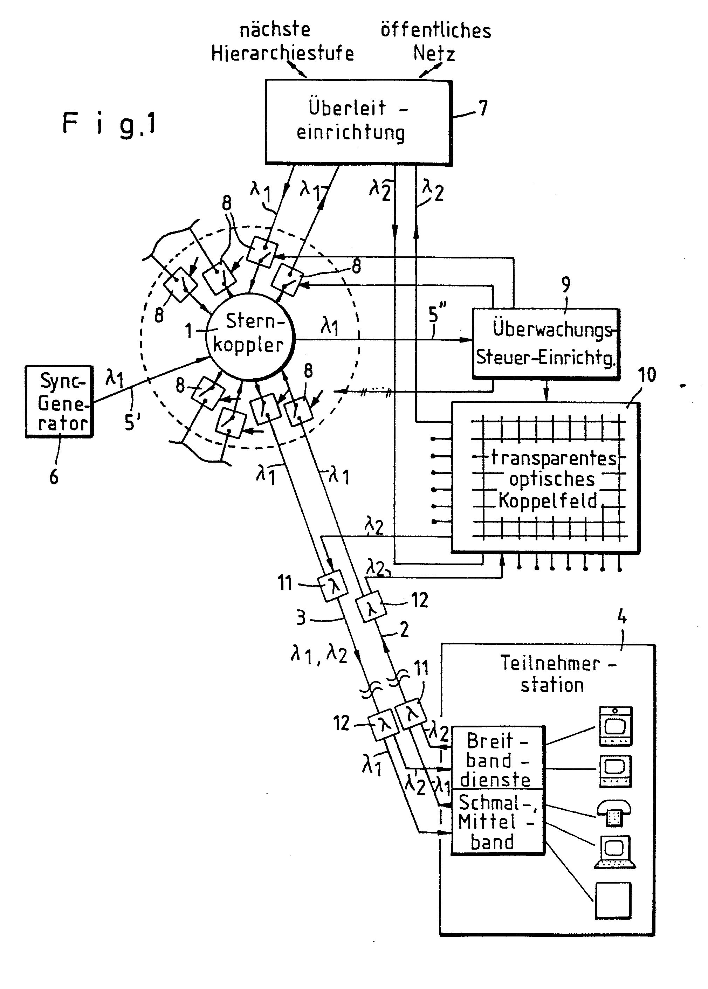

Wie Fig. 1 erkennen läßt, ist wesentliches Kernstück eines Lokalen Kommunikationssystems LKS mit optischen Kanälen gemäß der Erfindung ein optischer Sternkoppler 1. An ihm sind über getrennte Sendeleiter 2 und Empfangsleiter 3 die einzelnen Teilnehmerstationen 4 angeschlossen. Direkt in den Sternkoppler 1 wird über eine eigene Sendeleitung 5' von einem Synchronisierzeichen-Generator 6 ein leerer Zeitrahmen eingespeist. Er wird an alle Teilnehmerstationen 4 verteilt und gilt als gemeinsame Referenz für das Zeitmultiplexsystem. Dieser Teil des Systems ist mit schneller Leitungsvermittlung für die Abwicklung von Schmal- und Mittelband- Diensten ausgelegt.

Zur Verhinderung eines unbefugten Zugriffs auf Zeitschlitze sind zwischen dem Sternkoppler 1 und den Sende- und Empfangsleitern 2, 3, die zu den einzelnen Teilnehmerstationen 4 sowie zu einer Überleiteinrich- tung 7 führen, optische Schalter 8 vorgesehen. Diese werden, entsprechend dem Belegungszustand der einzelnen Zeitschlitze für die verschiedenen Verbindungen von einer Überwachungs- und Steuer-Einrichtung 9 gesteuert. Die betreffenden Informationen bezieht die Überwachungs- und Steuereinrichtung 9 über eine individuelle Empfangsleitung 5'' vom Sternkoppler 1, ähnlich wie ein Empfangsteil einer Teilnehmerstation bzw. der Überleiteinrichtung 7, und wertet diese nach Art einer Vermittlungssteuerung aus.

Für Breitbanddienste, die als solche getrennt von den Schmal- und Mittelbanddiensten übermittelt werden, sind entsprechende Komponenten für eine getrennte Führung vorgesehen. Außer der dargestellten Variante für Wellenlängenmultiplex sind beispielsweise auch weitere getrennte Sende- und Empfangsleiter in den Teilnehmeranschlußleitungen möglich. Während die Signalisierung, auch bei Breitbanddiensten, im Sternkoppler-TDMA-System abgewickelt wird, erfolgt die Durchschaltung von Breitbanddiensten in einem optischen Breitband-Koppelfeld 10.

Das erfindungsgemäße System ist transparent in dem Sinne, daß bis auf die Länge (Dauer) eines Zeitschlitzes keine weiteren Vorgaben bezüglich Art und Struktur der Daten, Modulation, Kodierung usw. gemacht werden. Im Breitbandbereich entfällt darüber hinaus die Festlegung auf eine Zeitschlitzlänge. Die Breitbanddienste können sogar als analoge optische Signale übertragen und in einem transparenten Breitband-Koppelfeld 10 durchgeschaltet werden.

Das Netz hat Sternstruktur. Es ist im dargestellten Beispiel durch Anwendung der Wellenlängen-Multiplextechnik in zwei Subsysteme untergliedert. Schmalbanddienste und schneller Datenverkehr werden über eine erste Lichtwellenlänge $\lambda_1$ im einen, Breitbanddienste über mindestens eine andere Lichtwellenlänge $\lambda_2$ im anderen Subsystem abgewickelt. Dem entsprechend befinden sich an den Enden der Teilnehmeranschlußleitungen mit jeweils einem Sendeleiter 1 und einem Empfangsleiter 2 Wellenlängen-Multiplexer 11 bzw. -Demultiplexer 12. Im Subsystem für Schmalbanddienste und schnellen Datenverkehr werden die Kanäle nach dem Prinzip der dezentralen Vermittlung, im Subsystem für Breitbanddienste nach dem Prinzip der zentralen Vermittlung durchgeschaltet.

Für ein Koppelfeld 10 zur Breitband-Vermittlung können Matrizen verwendet werden, die aus optischen LiNbO$_3$-Schaltern aufgebaut sind. Ein Vorteil der optischen Vermittlung ist die Bitratenunabhängigkeit für die übermittelten Daten, was insbesondere der für ein LKS erforderlichen Flexibilität entgegenkommt, d. h., für die Teilnehmer sind in diesem System verschiedene Breitbanddienste gleichzeitig möglich. Beispielsweise können jeweils ein Paar oder eine Gruppe von Teilnehmern 4 an einem Dienst "hochaufgelöstes Fernsehen" (high definition television - HDTV), andere am Dienst "Bildtelefon", hierbei entweder mit herkömmlichem Standard, mit TV-Qualität, mit Studio-Qualität, usw. teilnehmen.

Obwohl sich die verschiedensten Dienstekategorien definieren lassen und entweder dem einen oder dem anderen Subsystem zuordnen lassen würden, sind Übereinstimmungen oder zumindest Ähnlichkeiten in Teilaspekten in so großem Umfang vorhanden, daß hierdurch eine Verknüpfung und eine gewisse Abhängigkeit eines Subsystems vom anderen, d. h. also ein integriertes LKS gemäß der Erfindung sinnvoll ist. Da Schmal- und Breitbanddienste stark unterschiedliche Übertragungsbandbreite erfordern, wird hierfür allerdings kein gemeinsames Zeitmultiplexsystem vorgesehen. Dies würde einen unangemessen hohen Aufwand bezüglich der Schmalbanddienste verursachen und zudem infolge einer dazu notwendigen leistungsintensiven, schnellen Elektronik einen Notbetrieb für Schmalbanddienste bei Ausfall der Spannungsversorgung praktisch unmöglich machen.

Das Zeitmultiplexsystem mit wahlfreiem Zugriff (TDMA-System) im Subsystem für Schmalbanddienste und schnellen Datenverkehr ermöglicht einen schnellen Aufbau von Punkt-zu-Punkt-Verbindungen in einer Aufbauzeit von weniger als 5 msec. Hierdurch ist der Vorteil einer effektiven Kanalausnutzung begründet. Die Kanäle brauchen nämlich praktisch nur für die Dauer eines Datentransfers und deshalb jeweils für verhältnismäßig kurze Zeit belegt zu werden. Es ist auch eine hohe Sicherheit bei Datenverkehr gegeben, da Kollisionen nur während der sehr kurzen Phase des Verbindungsaufbaus, nicht jedoch während der sich daran anschließenden Phase der Datenübertragung, auftreten können. Im Vergleich zu anderen Datentransfersystemen kann damit bei Ausführungsformen der Erfindung auch Redundanz zur Markierung, Sicherung etc. entfallen.

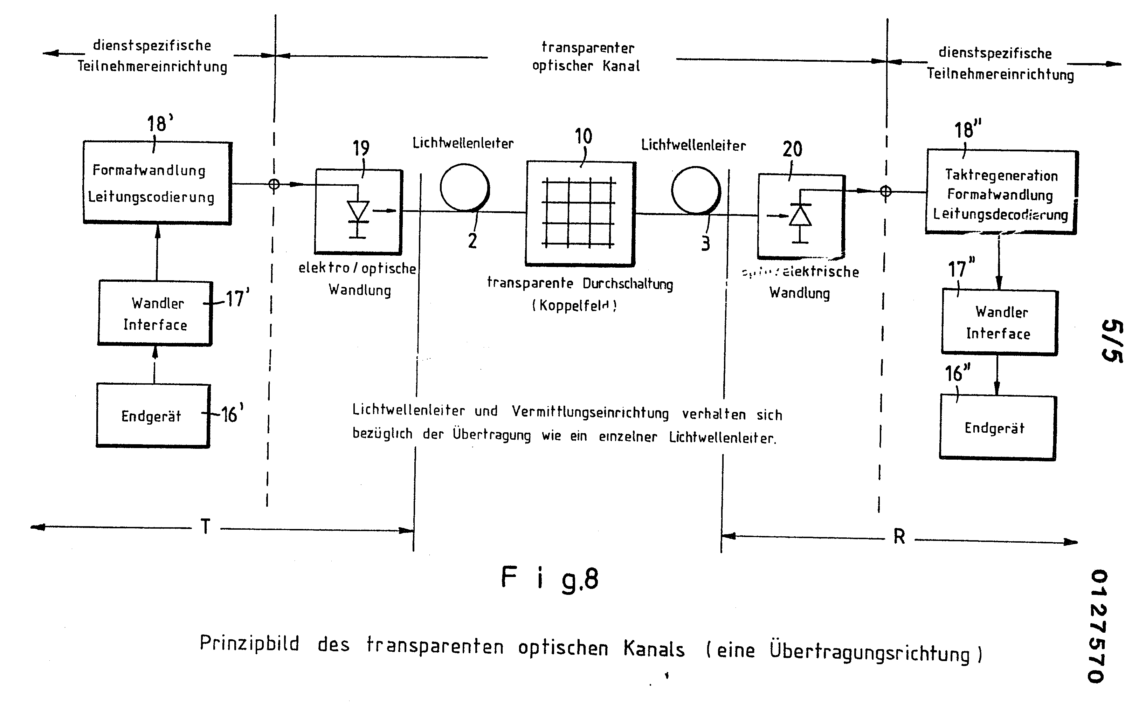

Im Hinblick auf die Entwicklung optischer Nachrichtensysteme befassen sich die Auführungsformen der Erfindung insbesondere mit Verfahren und Einrichtungen, mit denen auch die Vermittlung der Signale auf optischem Wege durchzuführen ist. Wenn nämlich die Übertragung der Signale ausschließlich auf optischem Wege erfolgt, sind im wesentlichen nur bei den Teilnehmerstationen 4 elektro-optische bzw. opto-elektrische Wandler 19, 20 (vgl. Fig. 8) erforderlich. Bei zentralen Einrichtungen, insbesondere für die Steuerung von Vermittlungsstellen, sowie an Übergängen in andere, insbesondere öffentliche Netze, sind derartige Wandler natürlich ebenfalls erforderlich. Funktionselemente in einem LKS zur Signalregeneration, Verstärkung etc. von Signalen sollten außerhalb von Teilnehmerstationen 4 nach Möglichkeit entfallen können oder ebenfalls auf optischer Signalverarbeitung beruhen. Hierdurch ergeben sich insbesondere für die Vermittlung von Breitbandkanälen erheblich günstigere Lösungen als bei Vermittlung solcher Signale auf elektrischem Wege.

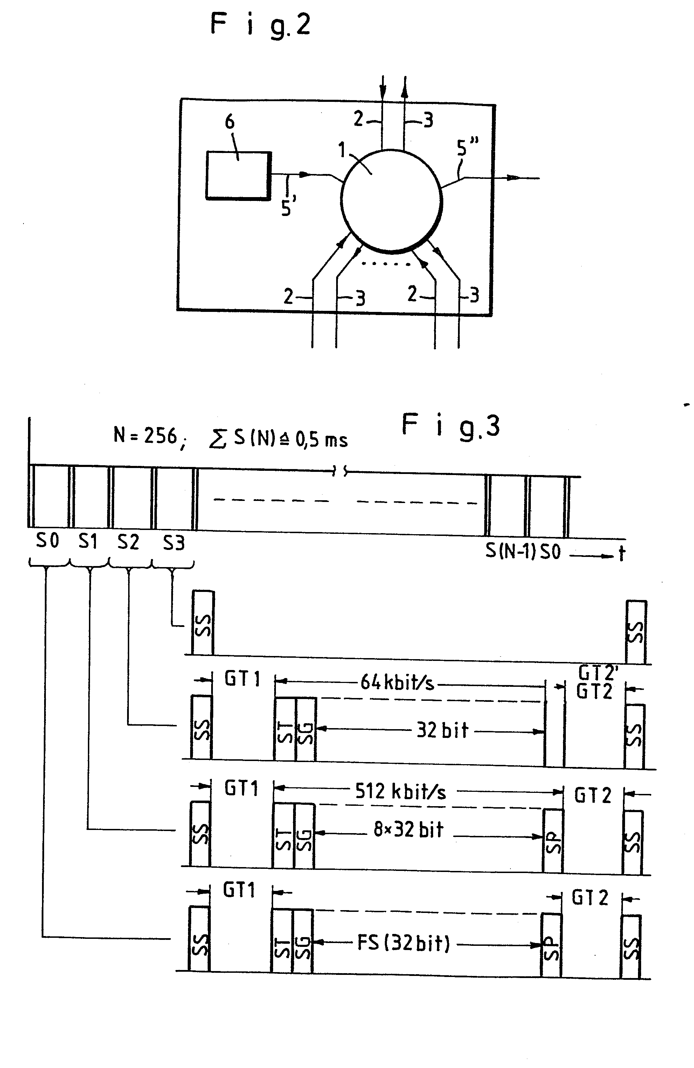

Der Einsatz von optischen $LiNbO_3$-Schaltern setzt insgesamt Monomode-Technik, auch für die Übertragungsleitungen 2, 3 also Monomodefasern voraus. Ein auch für Multimode-Technik geeignetes LKS, bei dem am zentralen Sternkoppler 1 auf optische Schalter 8 an den Anschlüssen der Sendeleiter 2 und Empfangsleiter 3 verzichtet wird, kann mit einer Vermittlungsstelle für Schmalbanddienste gemäß Fig. 2, ansonsten entsprechend Fig. 1, aufgebaut werden. An den Sternkoppler 1 sind dann die einzelnen Teilnehmeranschlußleitungen 2, 3 sowie über die Sendeleitung 5' der Synchronisierzeichen-Generator 6, auch eine Empfangsleitung 5'', die zur Steuereinrichtung 9 eines Breitbandkoppelfeldes führt, und Sende- und Empfangsleiter 2, 3 für die Überleiteinrichtung 7, direkt angeschlossen. Bei dieser Ausführungsform läßt sich allerdings nicht mehr die Abhör- und Ausfallsicherheit so leicht gewährleisten wie bei einer Ausführungsform, die vollständig Fig. 1 entspricht. Selbstverständlich kann aber auch eine Ausführungsform gemäß Fig. 2 in Monomode-Technik aufgebaut sein.

Optische Koppelfelder 10 für öffentliche Netze mit entsprechend großer Teilnehmerzahl lassen sich nach dem derzeitigen Stand der Entwicklung in Lithium-Niobat-Technik noch nicht realisieren. Substrate in herkömmlicher Größe (2-Zoll-Wafer) erlauben nur eine Kaskadierung von fünf Ebenen aus $LiNbO_3$-Schaltern auf Richtkopplerbasis und geben somit die maximale Größe einer Schaltmatrix, z. B. 4 x 4- oder 3 x 5-Matrizen, vor.

Ein weiterer Grund, der einen Einsatz von LiNbO$_3$-Komponenten in komplexen Koppelfeldern derzeit noch erschwert, ist die vergleichsweise hohe Durchgangsdämpfung einer einzelnen bekannten Schaltmatrix. Für die oben erwähnte, bekannte 4 x 4-Matrix werden 6,25 dB Durchgangsverlust angegeben. Die Kaskadierbarkeit derartiger Koppelmatrizen ist damit auf maximal 6 Stufen beschränkt. Blockierungsfreie "Clos'sche" optische Koppelfelder der Größe 36 x 36 sind also durchaus realisierbar. Mittels Konzentration und Expansion und einer Inkaufnahme der dadurch begründeten Blockierungen können immerhin rund 100 Teilnehmerstationen 4 an ein solches optisches Koppelfeld 10 in einem LKS angeschlossen werden.

In Fig. 3 ist zur näheren Erläuterung des Zeitmultiplex-Systems mit wahlfreiem Zugriff - TDMA-System - die Folge von Zeitschlitzen SO, ..., S(N-1) eines Zeitrahmens sowie der Aufbau einzelner Zeitschlitze in diesem Zeitrahmen anhand von vier Beispielen dargestellt. Ein solches TDMA-System herrscht in dem "Subsystem" für Schmalbanddienste und schnellen Datenverkehr, und beinhaltet auch die Signalisierung für alle im LKS abwickelbaren Dienste, also auch die Signalisierung für Breitbanddienste.

Bei einem Rahmentakt entsprechend 2 kHz und N = 256 Zeitschlitzen pro Rahmen hat jeder Zeitschlitz die Dauer von

$$\frac{0,5 \text{ msec}}{256} = 1,953125 \text{ μsec.}$$

Ausgehend von einer Bitrate - brutto - von 48 bit pro Zeitschlitz und einer Nutzbitrate von 32 bit pro Zeitschlitz, die auch in der Signalisierungsphase zumindest zu Beginn aller abwickelbaren Dienste zugrundegelegt wird, sowie einem Synchronisierbit SS zur Kennzeichnung des Beginns eines Zeitschlitzes, einem Startbit ST zur Kennzeichnung des Nutzbereichs und einem direkt darauf folgenden Signalisierungsbit SG zur Kennzeichnung einer Signalisierung im Nutzbereich, verbleibt pro Zeitschlitz netto die Dauer entsprechend 13 bit = 0,529 µsec, im Falle eines Stop-bits SP von ca. 41 nsec am Ende des Nutzbereichs entsprechend 12 bit = 0,488 µsec. Zur Verwendung als Schutzzone GT, die jeweils auf Beginn und Ende eines Zeitschlitzes in GT1 und GT2 aufgeteilt werden kann, ist der maximale Toleranzbereich vorgegeben, innerhalb dessen eine Nachricht oder Signalisierung im Zeitschlitz zeitlich in beiden Richtungen verschiebbar ist, ohne die Information eines benachbarten Zeitschlitzes zu zerstören. Innerhalb des Nutzbereichs (und zwar nur dort), der in jedem der 256 Zeitschlitze die Dauer von 1,302 µsec hat, können z. B. für einen 64 kbit/sec-Kanal 32 bit zu je ca. 40 nsec, für einen 512 kbit/sec-Kanal 8 x 32 bit zu je ca. 5 nsec untergebracht werden.

Im Zeitschlitz SO eines jeden Zeitrahmens befindet sich das Rahmen-Synchronisierzeichen FS, dessen 32 bit einem fest für das System vereinbarten Muster entsprechen. Dabei nimmt das davor befindliche Signalisierungsbit SG auf jeden Fall den Zustand für Signalisierung ein. Sofern das Ende des Nutzbereiches noch durch ein Stop-bit SP markiert wird, kann auch dieses als zum Muster des Rahmen-Synchronisierzeichens FS gehörend angesehen werden. Dies gilt gleichfalls für das Startbit ST, so daß für das Muster dieses Zeichens FS praktisch insgesamt 35 bit zur Verfügung stehen. Der Synchronisierzeichen-Generator 6 - vgl. Fig. 1 - setzt dieses Rahmen-Synchronisierzeichen FS zeitlich so in den Sternkoppler 1 ab, daß die Schutzzonen GT1 und GT2 am Anfang und am Ende des Zeitschlitzes SO z. B. gleich lang sind.

Für einen Zeitschlitz S1 ist der Aufbau als Beispiel für einen 512 kbit/s-Kanal dargestellt, für einen Zeitschlitz S2 hingegen für einen 64 kbit/s-Kanal. Dort ist zudem der zeitliche Bereich am Ende des Nutzbereichs, in dem sich bei Zeitschlitz SO und S1 das Stopbit SP befindet, offen dargestellt. Dies soll bedeuten, daß das Stopbit auch entfallen darf.

Schließlich ist als Beispiel der Zeitschlitz S3 als leerer oder freier Zeitschlitz dargestellt. Dies ist für eine Teilnehmerstation, die auf diesen Zeitschlitz zugreifen will, erst nach Ablauf der Gesamtdauer GT für die Schutzzonen sicher erkennbar. Sollte eine andere Teilnehmerstation zur selben Zeit, d. h. während der betreffende Zeitrahmen im System herrscht, ebenfalls auf diesen freien Zeitschlitz S3 zugreifen, entsteht im Sternkoppler 1 ein undefinierbarer Zeitschlitzinhalt. Aufgrund einer solchen Kollision werden die betreffenden Teilnehmerstationen den Versuch, diesen Zeitschlitz für sich zu belegen, aufgeben und den Aufbau einer gewünschten Verbindung erneut in einem anderen Zeitschlitz versuchen. Diese Vorgehensweise ist sinnvoll und durchaus zumutbar.

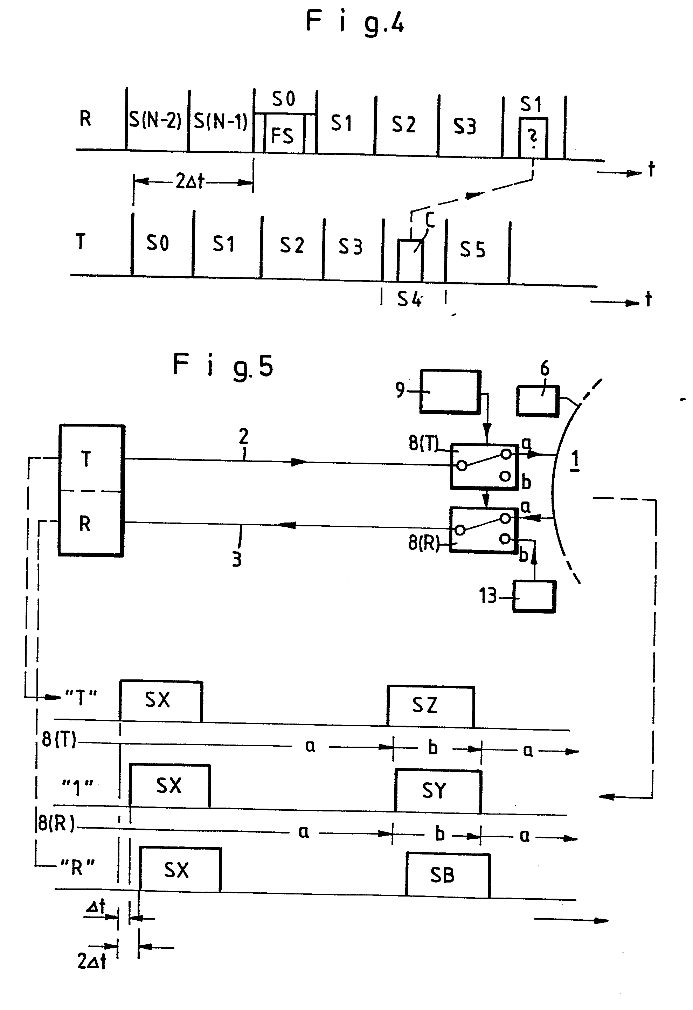

Anhand der Fig. 4, in der in zwei Zeilen Ausschnitte des bei einer Teilnehmerstation 4 herrschenden Zeitrahmens gemäß Fig. 3 dargestellt sind, wird nun der Ablauf einer Synchronisation einer Teilnehmerstation auf diesen Zeitrahmen erläutert. In der oberen Zeile R ist über der Zeit t aufgetragen, wann auf der Empfangsseite R der Teilnehmerstation welcher Zeitschlitz - SO, ... S(N-1) - detektiert wird. Um im Sternkoppler den Synchronismus zu erreichen, muß die Sendeseite T früher beginnen. In der zweiten Zeile T ist diese Differenz 2Δt gegenüber der Zeile R angegeben. Sie wird bei der Installation der Teilnehmerstation ermittelt und entsprechend eingestellt. Infolge Temperaturschwankungen oder dergleichen kann sich die Laufzeit jedoch etwas ändern. Von der Sendeseite wird deshalb z. B. im Zeitschlitz S4 ein Prüfwort C ausgesendet, das in derselben Teilnehmerstation ebenfalls im Zeitschlitz 4 der Zeile R, also auf der Empfangsseite, erwartet wird. Dies ist in Fig. 4 im Zeitschlitz S4 der Zeile R durch ein Fragezeichen "?" dargestellt. Trifft dort das Prüfwort C nicht innerhalb des zugelassenen Nutzbereichs des Zeitschlitzes S4 ein, so muß nur der Sendezeitpunkt auf der Sendeseite der Teilnehmerstation entsprechend verschoben werden. Um eventuelle Kollisionen während eines solchen Synchronisierungsvorganges zu vermeiden, kann das Prüfwort C, einschließlich Startbit ST und Signalisierungsbit SG, kürzer als der eigentliche Nutzbereich eines Zeitschlitzes sein und von vornherein etwas später als sonstige Information (Signalisierung, Nachrichten) ausgesendet werden. D. h., die Schutzzone GT wird bei Prüfung des Synchronismus entsprechend länger und bietet dadurch die notwendige Sicherheit.

Die Fig. 5 zeigt für den Anschluß einer Teilnehmerstation 4, hier nur grob in Empfangsteil R und Sendeteil T untergliedert, über den Sendeleiter 2 und den Empfangsleiter 3 sowie die entsprechend bezeichneten Schalter 8(R), 8(T) an den Sternkoppler 1 das darunter dargestellte Zeitdiagramm für die Zustände im Sendeteil T der Teilnehmerstation 4, im Sternkoppler 1 und im Empfangsteil R der Teilnehmerstation 4. Ein Zeitschlitz SX, der vom Sendeteil T ausgesendet wird, befindet sich um die Laufzeit $\Delta t$ verschoben im Sternkoppler 1, nochmals um die Laufzeit $\Delta t$ verschoben im Empfangsteil R derselben Teilnehmerstation (auch - wenn hier nicht dargestellt - beim anderen Teilnehmer). Während dieser Zeit befinden sich die Schalter 8(R), 8(T) in Stellung a. In einem späteren Zeitschlitz SZ setzt dieselbe Teilnehmerstation eine weitere Nachricht ab. Im Sternkoppler 1 ist diese Zeitlage jedoch bereits für eine andere Verbindung, an der dieser Teilnehmer nicht beteiligt ist, mit einem Zeitschlitz SY belegt. Die Steuerung 9 hat deshalb für diese Zeitdauer die Schalter 8(R), 8(T) in Stellung b umgeschaltet. Der Schalter 8(R) ist in der Stellung b an einen Besetztzeichen-Generator 13 angeschlossen, so daß die hier betrachtete Teilnehmerstation in dieser Zeitlage weder ihren ausgesendeten Zeitschlitz SZ noch den "fremden" Zeitschlitz SY, sondern einen mit einem Besetztzeichen versehenen Zeitschlitz SB empfängt. In Richtung von den Teilnehmerstationen zum Sternkoppler werden also vom Schalter 8(T) Störungen des Systems ferngehalten, in Richtung vom Sternkoppler zu Teilnehmerstationen vom Schalter 8(R) unberechtigtes Mithören verhindert. Infolge des in dieser Zeitlage empfangenen Besetztzeichens SB kann zudem die Teilnehmerstation das weitere Aussenden von Zeitschlitzen SZ in dieser Zeitlage abstellen.

Die Schalter 8(R) und 8(T) befinden sich in der Ruhelage in Stellung a. Das bedeutet, das System bleibt als solches funktionsfähig, wenn die Steuerung der Schalter 8(R), 8(T) oder dgl. ausfällt. Sie werden nur in Stellung b geschaltet, wenn zum betreffenden Zeitpunkt die zugehörige Teilnehmerstation nicht auf einen Zeitschlitz zugreifen soll oder darf.

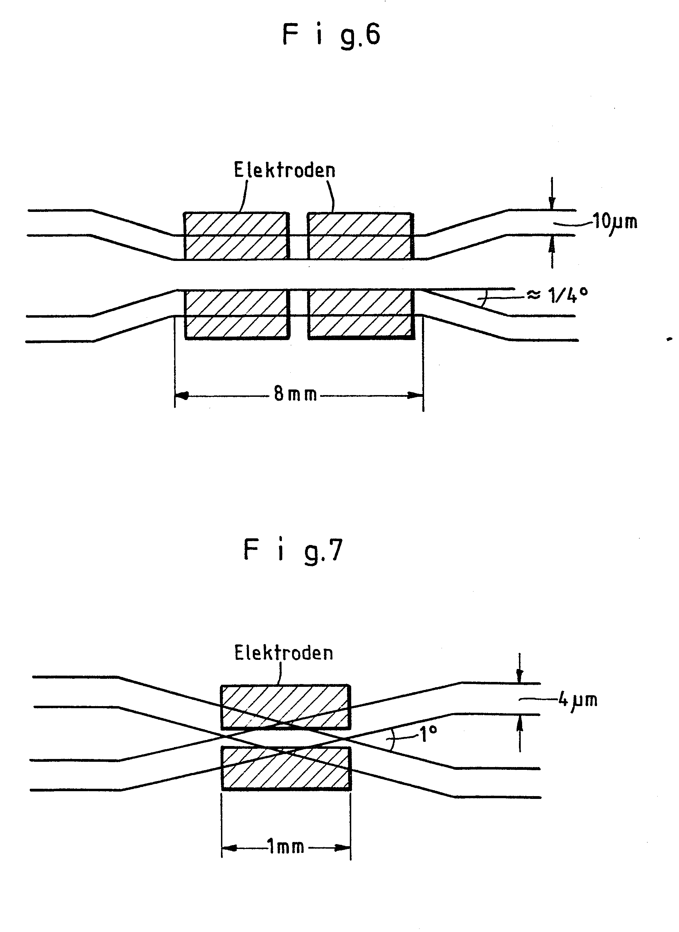

In den Fig. 6 und 7 sind zwei bekannte Ausführungsformen für LiNbO$_3$-Schalter schematisch dargestellt. Nähere Angaben hierzu finden sich in den entsprechenden Veröffentlichungen, nämlich bezüglich Fig. 8 in "IEEE Journal of Quantum Electronics" Vol. QE-18, No. 10 (1982), 1759 bzw. Fig. 9 im Vortrag der Verfasser: Neyer, K. und Mevenkamp, W. anläßlich des 7. DFG-Kolloquiums am 4./5. Mai 1983 in D - Ludwigsburg.

Die Fig. 8 zeigt für nur eine Übertragungsrichtung, da die andere identisch damit ist, die wichtigsten erforderlichen Einrichtungen für einen transparenten optischen Kanal eines LKS gemäß der Erfindung. Von einem Endgerät 16', z. B. einer Kamera, wird das abgegebene elektrische Signal einem Interface 17', z. B. auch zur Analog/Digital-Wandlung zugeführt. Daran schließt sich ein elektronisches Gerät 18', z. B. zur Formatwandlung des Digitalsignals und zur Leitungscodierung, an. Diese Einrichtungen sind dienstespezifisch ausgebildet. Zur Sendeseite T der Teilnehmereinrichtungen einerseits, bereits zum transparenten optischen Kanal andererseits gehört ein elektro-optischer Wandler 19, z. B. ein Laser, der mit dem vom Gerät 18' kommenden Ausgangssignal moduliert wird und ein entsprechendes optisches Signal in den Sendeleiter 2 einspeist. Von dort gelangt dieses optische Signal in das Koppelfeld 10 und wird dort auf den Empfangsleiter 3 durchgeschaltet, der zur Partner-Teilnehmerstation führt. Dort wird in dem einerseits bereits zum Empfangsteil R, andererseits noch zum transparenten optischen Kanal gehörenden opto-elektrischen Wandler 20, z. B.einer Photodiode, das empfangene Signal wieder in ein elektrisches Signal umgesetzt, einem elektronischen Gerät 18" zugeführt, wo auch eine Taktregeneration sowie die zum Gerät 18' reziproken Vorgänge - Formatwandlung, Leitungsdecodierung - stattfinden. Danach wird das Signal in einem Interface 17" wiederum einem zum Interface 17' reziproken Vorgang unterzogen und schließlich dem Endgerät 16", z. B. einem Monitor, zugeführt. Auch hier sind die Einrichtungen 16", 17" und 18" dienstespezifisch ausgebildet.

HEINRICH-HERTZ-INSTITUT FÜR NACHRICHTENTECHNIK BERLIN
GMBH                                    12/0583 EP


Patentansprüche


1. Lokales Kommunikationssystem (LKS) mit einem Sternnetz und optischen Kanälen, in dem für jede Teilnehmerstation (4) für die Sende- und die Empfangsrichtung getrennte, in einem zentralen Sternkoppler (1) zusammengeführte Lichtwellenleiter (2, 3) vorgesehen sind und
die Teilnehmerstationen (4) solche Komponenten (19, 20)
enthalten, die zur elektrisch-optischen bzw. optisch-
elektrischen Signalumwandlung und für den Zugriff auf
einen Kanal benötigt werden,
g e k e n n z e i c h n e t   d u r c h
ein vollsynchrones Zeitmultiplexsystem mit wahlfreiem
Zugriff (TDMA-System) und einer maximalen Datenrate im
Gbit/s-Bereich für die integrierte Abwicklung mit
schneller Leitungsvermittlung von unterschiedlichen
Diensten, d.h. Schmalbanddiensten mit einem Bandbreitenbedarf bis 64 kbit/s und Mittelbanddiensten mit einem Bandbreitenbedarf weit über 64 kbit/s, sowie gegebenenfalls zumindest einer schmalbandigen Signalisierung bei Breitbanddiensten.


2. Lokales Kommunikationssystem nach Anspruch 1, gekennzeichnet durch einen Synchronisierzeichen-Generator
(6), der einen leeren Zeitmultiplexrahmen erzeugt und
diesen über einen Lichtwellenleiter (5') in den zentralen Sternkoppler (1) einspeist.


3. Lokales Kommunikationssystem nach Anspruch 1 oder 2,
gekennzeichnet durch Zeitschlitze des Zeitmultiplexrahmens mit Schutzzonen (GT1, GT2) am Anfang und am Ende
eines Zeitschlitzes.

4. Lokales Kommunikationssystem nach einem der Ansprüche 1 bis 3, gekennzeichnet durch eine beliebig wählbare Bitrate innerhalb des Nutzbereichs eines Zeitschlitzes.

5. Lokales Kommunikationssystem nach einem der Ansprüche 1 bis 4, gekennzeichnet durch ein eigenes transparentes optisches Koppelfeld (10) mit einer reinen Raumstufe für die Durchschaltung von Breitbanddiensten, an das für jede Teilnehmerstation (4) getrennte Lichtwellenleiter (2, 3) für die Sende- und die Empfangsrichtung angeschlossen sind.

6. Lokales Kommunikationssystem nach Anspruch 5, gekennzeichnet durch optische Schalter in $LiNbO_3$-Technik, aus denen das Koppelfeld (10) für die Durchschaltung der Breitbanddienste aufgebaut ist.

7. Lokales Kommunikationssystem nach einem der Ansprüche 1 bis 6, gekennzeichnet durch optische Schalter (8) an den Anschlüssen der Lichtwellenleiter (2, 3) für die Sende- und die Empfangsrichtung am zentralen Sternkoppler (1) und durch eine als Überwachungseinrichtung (9) für den Belegungszustand der Kanäle ausgebildete Station, die die optischen Schalter (8) dem Belegungszustand entsprechend steuert.

8. Lokales Kommunikationssystem nach Anspruch 7, gekennzeichnet durch optische Schalter (8) in $LiNbO_3$-Technik, vorzugsweise zusammen mit dem zentralen Sternkoppler (1) als integriertes Bauteil.

9. Lokales Kommunikationssystem nach einem der Ansprüche 1 bis 8, gekennzeichnet durch eine als Überleiteinrichtung (7) zu einem anderen, insbesondere öffentlichen Netz ausgebildete Station.

10. Lokales Kommunikationssystem nach einem der Ansprüche 1 bis 9, gekennzeichnet durch eine für Überwachungs-, Überleit-, Steuer- und insbesondere Gebührenerfassungsaufgaben ausgebildete Station.

Fig.1

## F i g.2

## F i g.3

$N = 256 \, ; \quad \sum S(N) \triangleq 0,5 \, ms$

S0   S1   S2   S3                                    S(N-1) S0 ──→ t

SS

GT1 ├── 64 kbit/s ──┤ GT2'
GT2
SS   ST SG ←── 32 bit ──→   SS

GT1 ├── 512 kbit/s ──┤ GT2
SS   ST SG ←── 8×32 bit ──→ SP   SS

GT1                          GT2
SS   ST SG ←── FS (32 bit) ──→ SP   SS

# Fig.4

# Fig.5

F i g.6

Elektroden

10µm

≈ 1/4°

8mm

F i g.7

Elektroden

4µm

1°

1mm

transparenter
optischer Kanal

**18'**

Formatwandlung
Leitungscodierung

**19**

elektro / optische
Wandlung

Lichtwellenleiter

**10**

transparente Durchschaltung
( Koppelfeld )

Lichtwellenleiter

**20**

opt. / elektrische
Wandlung

**18"**

Taktregeneration
Formatwandlung
Leitungsdecodierung

**17'**

Wandler
Interface

**17"**

Wandler
Interface

**16'**

Endgerät

**16"**

Endgerät

2

3

Lichtwellenleiter und Vermittlungseinrichtung verhalten sich
bezüglich der Übertragung wie ein einzelner Lichtwellenleiter.

T

R

F i g.8

Prinzipbild des transparenten optischen Kanals ( eine Übertragungsrichtung )

5/5

0127570